# EUROPEAN PATENT APPLICATION

(11) **EP 4 804 572 A1**
(43) Date of publication of application: **09.09.2026**
(21) Application number: 23957583.0
(22) Date of filing: 31.10.2023
(51) Int. Cl.: H04W 4/029, H04W 4/90, H04W 64/00, H04W 76/50, H04W 84/06

(54) **PROVISION OF POSITION INFORMATION REGARDING COMMUNICATION DEVICE CONNECTED TO COMMUNICATION STATION**

(71) Applicant: Rakuten Mobile, Inc., Tokyo 158-0094 (JP)
(72) Inventor: AOYAGI, Kenichiro, Tokyo 158-0094 (JP)
(74) Representative: Betten & Resch
(86) International application number: PCT/JP2023/039196
(87) International publication number: WO 2025/094254

(57) **Abstract**

A communication control apparatus 3 includes at least one processor that executes: accepting, by a position information request acceptor 31, a request for position information concerning a communication device 2 connected to a communication station CS; and providing, by a positioning information provider 32, positioning information acquired through a positioning function (that is, a positioning device 43) of the communication station CS as the position information concerning the communication device 2 when the request satisfies a specific condition. When position information of the communication device 2 itself can be acquired through a satellite positioning device included in the communication device 2, the positioning information provider 32 does not provide positioning information acquired through the positioning function of the communication station CS.

## Description

### TECHNICAL FIELD

The present disclosure relates to provision of position information concerning a communication device connected to a communication station.

### BACKGROUND ART

The number, types, and applications of wireless communication devices (hereinafter, also collectively referred to as communication device) typified by smartphones and Internet of Things (IoT) devices are continuously increasing, and extension and improvement of radio communication standards are continuing. For example, a commercial service of the Fifth Generation Mobile Communication System known as "5G" was started in 2018, but the standards are still being formulated in the Third Generation Partnership Project (3GPP). In addition, efforts have been made to formulate a standard of "6G" or a Sixth Generation Mobile Communication System as a next-generation radio communication standard subsequent to 5G.

### CITATION LIST

### Patent Literature

Patent Literature 1: US 2021/0168643 A

### SUMMARY OF INVENTION

### TECHNICAL PROBLEM

In a mobile communication system, a relay station that relays communication between a base station and a communication device may be provided for the purpose of expanding a communication area, improving communication quality, and the like. As the relay station, an integrated access and backhaul (IAB) node having a positioning function equivalent to that of a communication device having a global positioning system (GPS) module is also known. By using such a positioning function of the relay station, position information concerning the relay station itself or a communication device connected to the relay station can be acquired. However, since the position information suggests the existence or location of a relay station, which is often preferred to be handled as a secret for the communication company, it is also assumed that active use is not desired.

The present disclosure has been made in view of such a circumstance and provides a communication control apparatus and the like capable of preventing unlimited use of a positioning function of a communication station.

### SOLUTION TO PROBLEM

A communication control apparatus according to an aspect of the present disclosure includes at least one processor that executes: accepting, by a position information request acceptor, a request for position information concerning a communication device connected to a communication station; and providing, by a positioning information provider, positioning information acquired through a positioning function of the communication station as the position information concerning the communication device when the request satisfies a specific condition.

According to the present aspect, the use of the positioning function of the communication station can be limited to when the request for the position information concerning the communication device connected to the communication station satisfies a specific condition.

Another aspect of the present disclosure is a communication control method. The communication control method includes executing, by at least one processor: acceptance of a request for position information concerning a communication device connected to a communication station; and provision of positioning information acquired through a positioning function of the communication station as the position information concerning the communication device when the request satisfies a specific condition.

Still another aspect of the present disclosure is a storage medium. The storage medium stores a communication control program of causing at least one processor to execute: acceptance of a request for position information concerning a communication device connected to a communication station; and provision of positioning information acquired through a positioning function of the communication station as the position information concerning the communication device when the request satisfies a specific condition.

Any combinations of the above constituent elements, and modifications of these expressions into methods, apparatuses, systems, recording media, computer programs, and the like are also included in the present disclosure.

### ADVANTAGEOUS EFFECTS OF INVENTION

According to the present disclosure, unlimited use of a positioning function of a communication station can be prevented.

### BRIEF DESCRIPTION OF DRAWINGS

[Fig. 1] Fig. 1 schematically illustrates an outline of a wireless communication system to which a communication control apparatus is applied.
[Fig. 2] Fig. 2 schematically illustrates an overall configuration of a wireless communication system to which a communication control apparatus is applied.
[Fig. 3] Fig. 3 is a functional block diagram of a communication control apparatus.
[Fig. 4] Fig. 4 is a flowchart illustrating processing by the communication control apparatus.

### DESCRIPTION OF EMBODIMENTS

Hereinafter, modes for carrying out the present disclosure (hereinafter, also referred to as embodiment) will be described in detail with reference to the drawings. In the description or drawings, the same or equivalent constituent elements, members, processing, and the like are denoted by the same reference numerals, and redundant description is omitted. The scale and shape of each part shown in the drawings are set for the sake of convenience in order to simplify the description, and are not limitedly interpreted unless otherwise specified. The embodiments are exemplary and do not limit the scope of the present disclosure in any way. All features and combinations thereof presented in the embodiments are not necessarily essential to the present disclosure.

For convenience, the embodiments are presented in a decomposed manner into constituent elements for each function or each function group that realize the embodiments. However, one constituent element in the embodiments may be realized in practice by a combination of a plurality of constituent elements as separate bodies, or a plurality of constituent elements in the embodiments may be realized in practice by one constituent element as an integral body. In the description of the wireless communication system in the present embodiment, a term in an existing radio communication standard such as 5G is used for convenience. This is not intended to limit the present disclosure to 5G or the like, and does not preclude application of the present disclosure in a case where a technology similar to the present disclosure is provided with a different name in a future wireless communication system such as 6G.

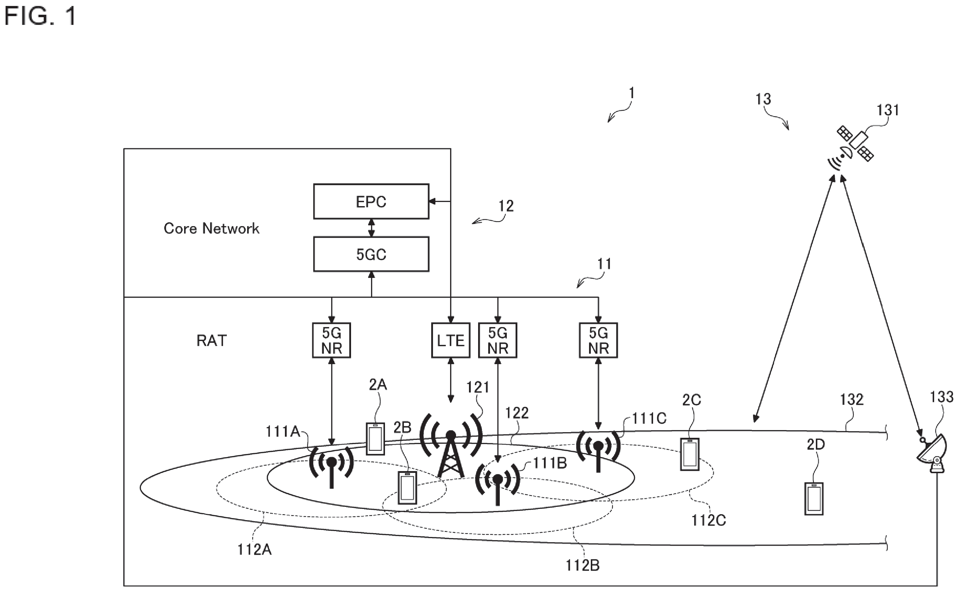

Fig. 1 schematically illustrates an outline of a wireless communication system 1 to which a communication control apparatus according to an embodiment of the present disclosure is applied. The wireless communication system 1 includes a 5G wireless communication system 11, a 4G wireless communication system 12, and a satellite communication system 13. The 5G wireless communication system 11 is compliant with the Fifth Generation Mobile Communication System (5G) that uses New Radio (NR) or the Fifth Generation New Radio (5G NR) as a radio access technology (RAT) and uses the Fifth Generation Core (5GC) as a core network (CN). The 4G wireless communication system 12 is compliant with the fourth Generation Mobile Communication System (4G) that uses Long Term Evolution (LTE) or LTE-Advanced as a radio access technology and uses Evolved Packet Core (EPC) as a core network. The satellite communication system 13 is responsible for satellite communication via a communication satellite 131. Although not illustrated, the wireless communication system 1 may include a wireless communication system of a generation before 4G, may include a wireless communication system of a generation after 5G (6G or the like), or may include any wireless communication system not associated with a generation such as Wi-Fi (registered trademark). The wireless communication system 1 does not have to include some or all of the 5G wireless communication system 11, the 4G wireless communication system 12, and the satellite communication system 13.

The 5G wireless communication system 11 includes a plurality of 5G base stations 111A, 111B, and 111C (hereinafter, also collectively referred to as 5G base station 111) that are installed on the ground and can communicate with communication devices 2A, 2B, 2C, and 2D (hereinafter, also collectively referred to as communication device 2) such as a smartphone also called user equipment (UE) or user terminal (UT) through 5G NR. The base station 111 in 5G is also referred to as gNodeB (gNB). The communicable range or the supported range of each 5G base station 111A, 111B, and 111C is referred to as cell, and the cells are illustrated as 112A, 112B, and 112C (hereinafter, also collectively referred to as 5G cell 112), respectively.

The size of the 5G cell 112 of each 5G base station 111 may be freely determined, but is typically several meters to several tens of kilometers in radius. Although there is no established definition, a cell having a radius of a few meters to tens of meters may be called a femtocell, a cell having a radius of a few meters to tens of meters may be called a picocell, a cell having a radius of a few tens of meters to hundreds of meters may be called a microcell, and a cell having a radius of more than a few hundred meters may be called a macrocell. In 5G, a radio wave having a high frequency such as a millimeter wave is often used, the radio wave is shielded by an obstacle due to high straightness, and a communicable distance is shortened. Thus, in 5G, a small cell tends to be frequently used as compared with 4G or earlier generation.

The communication device 2 can perform 5G communication as long as it is inside at least one of the plurality of 5G cells 112A, 112B, and 112C. In the illustrated example, the communication device 2B in 5G cells 112A and 112B can communicate with both the 5G base stations 111A and 111B through 5G NR. The communication device 2C in the 5G cell 112C can communicate with the 5G base station 111C through 5G NR. Since the communication device 2A and 2D are outside all the 5G cells 112A, 112B, and 112C, communication via 5G NR cannot be performed. 5G communication through 5G NR between each communication device 2 and corresponding 5G base station 111 is managed by 5GC which is a core network. For example, 5GC performs exchange of data with each 5G base station 111, exchange of data with an external network such as EPC, the satellite communication system 13, or the Internet, movement management of the communication device 2, and the like.

The 4G wireless communication system 12 includes a plurality of 4G base stations 121 (only one is illustrated in Fig. 1). The plurality of 4G base stations 121 are installed on the ground and can communicate with the communication device 2 through LTE or LTE-Advanced. The base station 121 in 4G is also referred to as eNodeB (eNB). As with each 5G base station 111, the communicable range or the supported range of each 4G base station 121 is also referred to as cell and is illustrated as 122.

The communication device 2 can perform 4G communication as long as it is inside the 4G cell 122. In the illustrated example, the communication devices 2A and 2B in the 4G cell 122 can communicate with the 4G base station 121 through LTE or LTE-Advanced. Since the communication devices 2C and 2D are outside the 4G cell 122, communication through LTE or LTE-Advanced cannot be performed. 4G communication through LTE or LTE-Advanced between each communication device 2 and corresponding 4G base station 121 is managed by EPC which is a core network. For example, EPC performs exchange of data with each 4G base station 121, exchange of data with an external network such as 5GC, the satellite communication system 13, or the Internet, movement management of the communication device 2, and the like.

Focusing on each of the communication devices 2A, 2B, 2C, and 2D, in the illustrated example, the communication device 2A is in a state capable of 4G communication with the 4G base station 121, the communication device 2B is in a state capable of 5G communication with the 5G base stations 111A and 111B and 4G communication with the 4G base station 121, and the communication device 2C is in a state capable of 5G communication with the 5G base station 111C. When there are a plurality of base stations (111A, 111B, 121) capable of communicating as in the communication device 2B, one base station determined to be optimal from the viewpoint of communication quality and the like is selected, and it communicates with the communication device 2B under the management by 5GC or EPC which is a core network. Since the communication device 2D is not in a state capable of communicating with any of the 5G base stations 111 and the 4G base stations 121, the communication device 2D performs communication with the satellite communication system 13 described below.

The satellite communication system 13 is a wireless communication system that uses, as a non-terrestrial base station, the communication satellite 131 as a low earth orbiting satellite that flies in a low earth orbiting space having a height of about 500 km to 700 km from the ground surface. As with the 5G base station 111 and the 4G base station 121, the communicable range or the supported range of the communication satellite 131 is also referred to as cell and is illustrated as 132. In this manner, the communication satellite 131 as a non-terrestrial base station provides the satellite communication cell 132 as a non-terrestrial communication cell to the ground. The communication device 2 on the ground can perform satellite communication as long as it is inside the satellite communication cell 132. As with the 5G base station 111 in the 5G wireless communication system 11 and the 4G base station 121 in the 4G wireless communication system 12, the communication satellite 131 as a base station in the satellite communication system 13 can wirelessly communicate with the communication device 2 in the satellite communication cell 132 directly or indirectly via an aircraft or the like. The radio access technology used by the communication satellite 131 for radio communication with the communication device 2 in the satellite communication cell 132 may be the same 5G NR as that of the 5G base station 111, may be the same LTE or LTE-Advanced as that of the 4G base station 121, or may be any other radio access technology usable by the communication device 2. Thus, the communication device 2 does not have to be provided with a special function or component for satellite communication.

The satellite communication system 13 includes a gateway 133 as a ground station installed on the ground and capable of communicating with the communication satellite 131. The gateway 133 includes a satellite antenna for communicating with the communication satellite 131 and is connected to the 5G base station 111 or the 4G base station 121 as a terrestrial base station constituting a terrestrial network (TN) via 5G NR, LTE, or other wired or radio access technology or interface that is the radio access technology for each station. In this manner, the gateway 133 intercommunicably connects a non-terrestrial network (NTN) configured by the communication satellite 131 as a non-terrestrial base station or a satellite base station and TN configured by the terrestrial base stations 111 and 121. When the communication satellite 131 performs 5G communication with the communication device 2 in the satellite communication cell 132 through 5G NR, 5GC connected via the gateway 133 and the 5G base station 111 (or a 5G radio access network) in TN is used as a core network. When the communication satellite 131 performs 4G communication with the communication device 2 in the satellite communication cell 132 through LTE or LTE-Advanced, EPC connected via the gateway 133 and the 4G base station 121 (or a 4G radio access network) in TN is used as a core network. In this manner, appropriate cooperation is taken between different wireless communication systems such as 5G communication, 4G communication, and satellite communication via the gateway 133.

The satellite communication with the communication satellite 131 is mainly used to cover an area where a terrestrial base station such as the 5G base station 111 or the 4G base station 121 is not provided or an area where the number of terrestrial base stations is small. In the illustrated example, the communication device 2D outside the communication cells of all the terrestrial base stations communicates with the communication satellite 131. On the other hand, the communication devices 2A, 2B, and 2C in a state of being able to satisfactorily communicate with any one of the terrestrial base stations can also communicate with the communication satellite 131 because they are in the satellite communication cell 132. However, in principle, by communicating with the terrestrial base station instead of the communication satellite 131 as a satellite base station, limited communication resources (including power) of the communication satellite 131 are saved for the communication device 2D and the like. The communication satellite 131 directs communication radio waves to the communication device 2D in the satellite communication cell 132 by beamforming to improve communication quality with the communication device 2D.

The size of the satellite communication cell 132 of the communication satellite 131 as a satellite base station can be freely set according to the number of beams emitted by the communication satellite 131, and for example, the satellite communication cell 132 having a diameter of about 24 km can be formed by combining up to 2,800 beams. As illustrated in the drawings, the satellite communication cell 132 is typically larger than a terrestrial communication cell, such as the 5G cell 112 or the 4G cell 122, and may include one or a plurality of 5G cells 112 or 4G cells 122 therein. In the above description, the communication satellite 131 that flies in a low earth orbiting space at a height of about 500 km to 700 km from the ground surface has been exemplified as a flying non-terrestrial base station. However, a communication satellite that flies in a high earth orbiting space such as a higher geostationary orbit or an unmanned or manned aircraft or a drone that flies in the atmosphere such as the lower (for example, about 20 km from the ground surface) stratosphere may be used as the non-terrestrial base station in addition to or instead of the communication satellite 131.

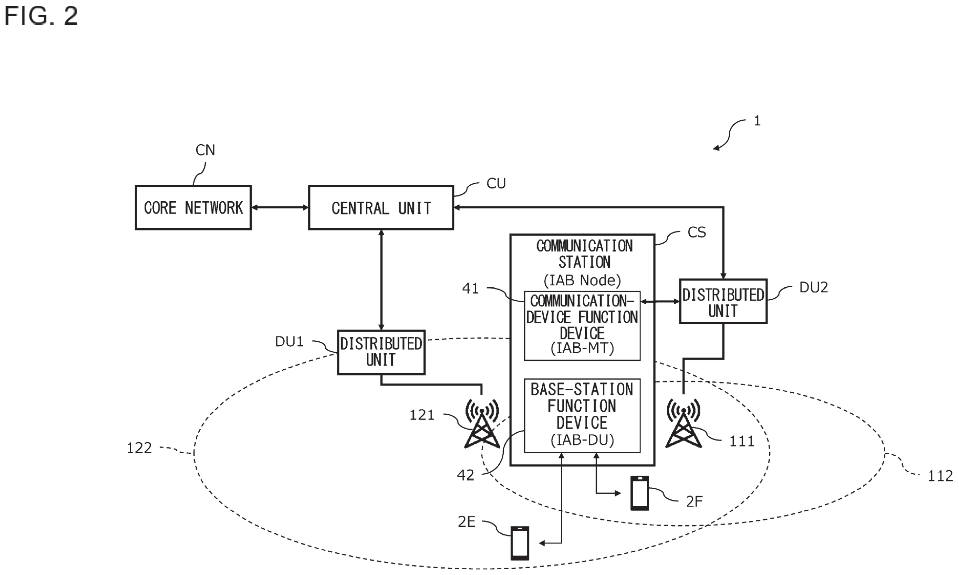

Fig. 2 schematically illustrates an overall configuration of the wireless communication system 1 to which a communication control apparatus according to an embodiment of the present disclosure is applied. As also illustrated in Fig. 1, the wireless communication system 1 is generally constructed by the terrestrial communication cells 112 and 122 (hereinafter, also referred to as fixed base station) provided by the terrestrial base stations 111 and 121 (hereinafter, also referred to as fixed communication cell) fixedly installed on the ground. However, there is an issue that mobile communication cannot be performed outside the fixed communication cell, and even in the fixed communication cell, the quality of mobile communication degrades depending on time and place. The wireless communication system 1 may also include the satellite communication system 13 in which the communication satellite 131 is a non-terrestrial base station or a mobile base station, but it is unrealistic to supplement the terrestrial network of the terrestrial base stations 111 and 121 only with the communication satellite 131.

To solve such an issue, as schematically illustrated in Fig. 2, it is preferable to introduce a communication station CS for supplementing the fixed communication cells 112 and 122 provided by the fixed base stations 111 and 121. The communication station CS can provide the communication device 2 with a static communication cell that does not change spatially or temporally and a dynamic communication cell that can change spatially or temporally. For example, the communication stations CS installed at fixed locations on the ground, such as the terrestrial base stations 111 and 121, provide static communication cells that do not change at least spatially. The moving communication station CS provides a spatially varying (that is, it moves) dynamic communication cell. Further, the communication station switchable between the operating state in which the dynamic communication cell is provided and the stopped state in which the dynamic communication cell is not provided is an example of the communication station CS that provides a dynamic communication cell that changes temporally (that is, ON/OFF switching is performed).

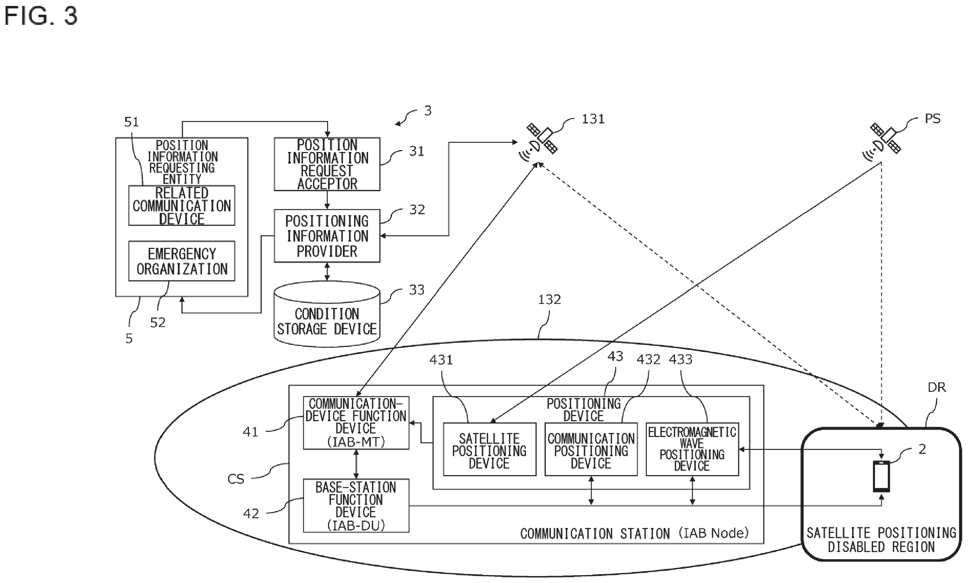

The communication station CS may be, for example, a communication station whose operating time is limited to a specific time zone, or may be an on-demand type communication station that is adaptively switched between a stopped state and an operating state according to a communication demand of a communication device or the like. The communication station CS may be a small base station capable of independently providing a preferably small communication cell such as a femtocell or a picocell without depending on other large base stations such as the terrestrial base stations 111 and 121 and the communication satellite 131, or may be a relay station that communicates with an existing base station or the master base stations 111, 121, and 131 (not illustrated in Fig. 2) to extend the existing communication cell or the master communication cells 112, 122, and 132 (not illustrated in Fig. 2). The communication station CS in the examples of Fig. 2 and Fig. 3 is an integrated access and backhaul (IAB) node or a mobile base station relay (MBSR) that functions as a relay station.

IAB is a technology formulated in 5G, and is a technology for extending a communication cell through a parent node by using a radio backhaul between a base station serving as an IAB donor (parent node) and an IAB node (child node) or between a parent-child IAB node (the IAB node close to the IAB donor becomes the parent node and the IAB node far from the IAB donor becomes the child node). Here, "extension of a communication cell" includes not only extension of an area covered by an existing communication cell but also improvement of communication quality of at least a part of the existing communication cell. Further, "extension of an area covered by a communication cell" includes not only extension of an area of an existing communication cell in a horizontal plane but also extension of the existing communication cell to a vertical direction, for example, an underground or an upper or lower floor of a building.

In Fig. 2, the communication station CS as an IAB node includes a communication-device function device 41 that functions as a communication device for a parent node (parent base station) including the fixed base stations 111 and 121, and a base-station function device 42 that functions as a child base station for the communication device 2 and provides a relay communication cell. In 5G, the communication-device function device 41 is defined as a mobile termination (MT) or an IAB-MT, and the base-station function device 42 is defined as a distributed unit (DU) or an IAB-DU. In other wireless communication systems including a generation after 5G, including a central unit (CU) to be described later, it is also assumed that functions similar to IAB, MT, DU, and CU are provided under different names. However, in the present embodiment, such similar functions may be used as IAB, MT, DU, and CU.

Fig. 2 illustrates two fixed base stations 111 and 121. The first fixed base station 121 as a 4G base station provides a first fixed communication cell 122 as a 4G cell, and the second fixed base station 111 as a 5G base station provides a second fixed communication cell 112 as a 5G cell. In the example of Fig. 2, the baseband function of each of the fixed base stations 111 and 121 is divided into a central unit (CU) on the core network CN side and a distributed unit (DU) on the communication device 2 side. The first distributed unit DU1 of the first fixed base station 121 is provided near a radio apparatus such as an antenna of the first fixed base station 121, typically in the same base station facility as that of the radio apparatus. The second distributed unit DU2 of the second fixed base station 111 is provided near a radio apparatus such as an antenna of the second fixed base station 111, typically in the same base station facility as that of the radio apparatus. The central unit CU in the illustrated example is shared by the first fixed base station 121 (the first distributed unit DU1) and the second fixed base station 111 (the second distributed unit DU2), but a central unit may be individually provided for each of the fixed base stations 111 and 121. The central unit CU is connected to the core network CN. The connection between the radio apparatus such as the antenna in each of the fixed base stations 111 and 121 and the distributed units DU1 and DU2, the connection between each of the distributed units DU1 and DU2 and the central unit CU, and the connection between the central unit CU and the core network CN are typically wired with a conductive wire, an optical fiber, or the like, but some or all of the connections may be wireless.

The communication-device function device 41 (IAB-MT) of the communication station CS can be wirelessly connected to the distributed unit DU of any of the fixed base stations 111 and 121 according to the location of the communication station CS. In the example of Fig. 2, the communication-device function device 41 is wirelessly connected to the second distributed unit DU2 of the second fixed base station 111. The communication station CS in this case functions as a child node having the second fixed base station 111 as a parent node (parent base station) or an IAB donor, and extends the second fixed communication cell 112 with the second fixed base station 111 as a parent node. Then, the base-station function device 42 (IAB-DU) of the communication station CS provides the communication device 2 with a relay communication cell (not illustrated) as an extended communication cell of the second fixed communication cell 112. In the example of Fig. 2, two communication devices 2E and 2F connected to the base-station function device 42 of the communication station CS are schematically illustrated. The first communication device 2E substantially communicates with the second fixed base station 111 through the communication station CS while being inside the first fixed communication cell 122 and outside the second fixed communication cell 112. The second communication device 2F substantially communicates with the second fixed base station 111 through the communication station CS while being within the overlapping area of the first fixed communication cell 122 and the second fixed communication cell 112. The communication station CS as an IAB node may extend a mobile communication cell or a non-terrestrial communication cell such as the satellite communication cell 132 by using a mobile base station or a non-terrestrial base station such as the communication satellite 131 as a parent base station, as described later with reference to Fig. 3.

The communication station CS of movable type is attached to a mobile object except for a case where the communication station CS can move or fly autonomously like the communication satellite 131. The mobile object is any movable object or person, and includes, for example, any rides such as an automobile, a train, a motorcycle, a bicycle, an airplane, a drone, or a ship. The moving communication station CS may be a communication device 2 carried by a moving person, for example, the communication device 2 having a tethering function or a personal hotspot function. Since such a communication device 2 (communication station CS) generally functions as a wireless LAN access point, the RAT (for example, 5G NR) used by the extension source base station (for example, the second fixed base station 111) and the RAT used by the extension destination communication station CS may be different.

Fig. 3 is a functional block diagram of a communication control apparatus 3 according the present embodiment. The communication control apparatus 3 includes a position information request acceptor 31, a positioning information provider 32, and a condition storage device 33. Some of these functional blocks may be omitted as long as the communication control apparatus 3 can realize at least some of the functions pr effects described below. These functional blocks are realized by cooperation of hardware resources such as a central processor, a memory, an input apparatus, and an output apparatus of a computer, and a peripheral device connected to the computer, and software executed using the hardware resources. Regardless of the type and installation location of the computer, each functional block described above may be realized by hardware resources of a single computer, or may be realized by combining hardware resources distributed to a plurality of computers. In particular, in the present embodiment, some or all of the functional blocks of the communication control apparatus 3 are preferably realized by the core network CN, but may be realized in a centralized or distributed manner by a base station (distributed unit DU or central unit CU) such as the communication satellite 131, the gateway 133, the communication station CS, or a computer or a processor provided in the communication device 2.

In the example of Fig. 3, the communication satellite 131 as a base station and the communication device 2 can communicate via the communication station CS or a relay station as an IAB node. As described above with reference to Fig. 2, the communication station CS provides the communication device 2 with the relay communication cell (not illustrated) as an extended communication cell of the satellite communication cell 132 provided by the communication satellite 131 through the communication-device function device 41 that functions as a communication device with respect to the communication satellite 131 as a parent base station and the base-station function device 42 that functions as a child base station with respect to the communication device 2. The base station is not limited to the communication satellite 131, and may be terrestrial base stations 111 and 121 capable of providing preferably large communication cells such as a macrocell.

Here, the communication device 2 is geographically or positionally within the satellite communication cell 132, but is within a satellite positioning disabled region DR where satellite radio waves from the communication satellite 131 and a positioning satellite PS to be described later do not sufficiently reach. Thus, the communication device 2 cannot directly communicate with the communication satellite 131, and it indirectly communicates with the communication satellite 131 via the communication station CS. The communication station CS that directly communicates with the communication satellite 131 is inside the satellite communication cell 132 and outside the satellite positioning disabled region DR.

As schematically indicated by a dotted line in Fig. 3, examples of the satellite positioning disabled region DR where satellite radio waves from the communication satellite 131 and the positioning satellite PS do not sufficiently reach include indoor, underground, bottom of valleys, inside of caves, and inside of tunnels. For example, when the communication device 2 is in a cave as the satellite positioning disabled region DR, the communication station CS may be in the vicinity of the entrance outside the cave. When the communication device 2 is in a building as the satellite positioning disabled region DR, the communication station CS may be disposed on a window, a roof, an entrance, or the like of the building.

In addition to the communication-device function device 41 and the base-station function device 42 described above with reference to Fig 2, the communication station CS may include a positioning device 43 capable of positioning at least one of the communication station CS and the communication device 2. The positioning device 43 includes at least one of a satellite positioning device 431, a communication positioning device 432, and an electromagnetic wave positioning device 433.

The satellite positioning device 431 is satellite positioning device such as a GPS module that acquires position information of the communication station CS itself based on a satellite positioning system such as a GPS or a global navigation satellite system (GNSS).

Specifically, the satellite positioning device 431 such as a GPS module receives satellite positioning radio waves from a plurality of positioning satellites PS constituting the satellite positioning system, and calculate the position information of the communication station CS based on each transmission time or the like. The communication device 2 may have a similar satellite positioning device. However, since the satellite positioning radio wave from the positioning satellite PS does not reach the communication device 2 in the satellite positioning disabled region DR, the position information of the communication device 2 cannot be calculated. That is, in the satellite positioning disabled region DR, the satellite positioning function of the communication device 2 is substantially invalidated.

The communication positioning device 432 estimates the position information of the communication device 2 based on communication between the communication station CS (base-station function device 42) and the communication device 2. For example, the time or delay required for communication between the communication station CS and the communication device 2 suggests a distance between the communication station CS and the communication device 2. When the communication station CS has a function such as beamforming, the direction of the antenna of the communication station CS communicating with the communication device 2 and the transmission direction or the reception direction of the beam suggest the direction in which the communication device 2 is present with respect to the communication station CS. Based on such a relative distance and direction of the communication device 2 with respect to the communication station CS, the communication positioning device 432 can estimate the position information of the communication device 2.

The electromagnetic wave positioning device 433 acquires the position information of the communication device 2 through a positioning electromagnetic wave emitted from one of the communication station CS and the communication device 2 to the other. For example, the communication station CS preferably emits, to the communication device 2, a positioning radio wave or positioning light having a wavelength or frequency different from that of the communication radio wave. The communication device 2 may notify the electromagnetic wave positioning device 433 of the time and intensity at which the positioning electromagnetic wave is received through communication with the base-station function device 42. The electromagnetic wave positioning device 433 can calculate the position information of the communication device 2 based on the transmission time, the transmission intensity, the transmission direction, and the like of the positioning electromagnetic wave in the electromagnetic wave positioning device 433 in addition to the reception time and the reception intensity of the positioning electromagnetic wave in the communication device 2.

The communication device 2 may emit a positioning electromagnetic wave to the communication station CS in an opposite manner. The communication device 2 notifies the electromagnetic wave positioning device 433 of transmission information such as the transmission time, the transmission intensity, and the transmission direction of the positioning electromagnetic wave through communication with the base-station function device 42. The electromagnetic wave positioning device 433 can calculate the position information of the communication device 2 based on the transmission information received from the communication device 2 in addition to the time and intensity at which the positioning electromagnetic wave is received. Instead of or in addition to the electromagnetic wave, any physical phenomenon capable of non-contact distance measurement, such as sound, vibration, or wave, may be used to acquire the relative position information of the communication device 2 with respect to the communication station CS.

The positioning information of the communication station CS or the communication device 2 acquired by the positioning device 43 as described above is provided to the communication satellite 131 and the core network CN (in particular, the positioning information provider 32) via the communication-device function device 41.

The position information request acceptor 31 accepts a request for position information concerning the communication device 2 connected to the communication station CS from a position information requesting entity 5 to be described later. When the request for the position information of the communication device 2 received by the position information request acceptor 31 satisfies the specific condition stored in the condition storage device 33, the positioning information provider 32 provides the position information acquired through the positioning function (that is, the positioning device 43) of the communication station CS to the position information requesting entity 5 as the position information concerning the communication device 2.

When the request for the position information of the communication device 2 satisfies a specific condition, the positioning information provider 32 may provide the position information of the communication station CS itself acquired through the satellite positioning function (that is, the satellite positioning device 431) of the communication station CS to the position information requesting entity 5 as the position information concerning the communication device 2. The position information provided in this case is typically the position information of the communication station CS in the vicinity of the communication device 2 and is not strictly the position information of the communication device 2. Thus, when providing the position information to the position information requesting entity 5, the positioning information provider 32 may add supplementary information such as that the position information is not strictly the position information of the communication device 2, and that the position information is strictly the position information of the communication station CS communicating with the communication device 2.

When the request for the position information of the communication device 2 satisfies a specific condition, the positioning information provider 32 may provide the position information concerning the communication device 2 estimated by the communication positioning device 432 based on the communication between the communication station CS (base-station function device 42) and the communication device 2 to the position information requesting entity 5. When the request for the position information of the communication device 2 satisfies a specific condition, the positioning information provider 32 may provide the position information requesting entity 5 with the positioning information of the communication device 2 acquired by the electromagnetic wave positioning device 433 through the electromagnetic wave emitted from one of the communication station CS and the communication device 2 to the other.

The positioning information provider 32 preferably provides the position information of the communication device 2 or the communication station CS itself measured by the positioning function (that is, the positioning device 43) of the communication station CS as described above only when the satellite positioning function of the communication device 2 is substantially invalidated. This is because, when the satellite positioning function of the communication device 2 is effective and position information of sufficient quality can be provided through a satellite positioning device such as its own GPS module, the advantage of using the positioning function of the communication station CS together is small. Rather, the use of the positioning function of the communication station CS increases the risk that the existence and location of the communication station CS, which is often preferred to be handled as a secret for the communication company, will become clear. Thus, the use of the positioning function of the communication station CS is preferably limited as much as possible.

For example, when the position information of the communication device 2 itself can be acquired through the satellite positioning device included in the communication device 2, the positioning information provider 32 does not provide the positioning information acquired through the positioning function (that is, the positioning device 43) of the communication station CS to the position information requesting entity 5 or invalidates the positioning device 43 even when the request for the position information of the communication device 2 satisfies a specific condition. When the position information of the communication device 2 itself acquired through the satellite positioning device included in the communication device 2 satisfies a predetermined positioning quality criterion, the positioning information provider 32 does not provide the positioning information acquired through the positioning function (that is, the positioning device 43) of the communication station CS to the position information requesting entity 5 or invalidates the positioning device 43 even when the request for the position information of the communication device 2 satisfies a specific condition.

In this manner, only when the satellite positioning device of the communication device 2 cannot generate the positioning information or when the quality of the generated positioning information is low, the positioning information provider 32 provides the position information of the communication device 2 or the communication station CS itself measured by the positioning function (that is, the positioning device 43) of the communication station CS. The communication device 2 in the example of Fig. 3 is in the satellite positioning disabled region DR where satellite positioning radio waves from the positioning satellites PS do not reach, and thus corresponds to such a limited case.

Further, the positioning information provider 32 provides the position information of the communication device 2 or the communication station CS itself measured by the positioning function (that is, the positioning device 43) of the communication station CS to the position information requesting entity 5 only when the request for the position information of the communication device 2 received by the position information request acceptor 31 satisfies a specific condition stored in the condition storage device 33.

The specific condition stored in the condition storage device 33 may be that the request for the position information of the communication device 2 accepted by the position information request acceptor 31 relates to a related communication device 51 having a predetermined relationship with the communication device 2. For example, when the request is from the related communication device 51 used by a related person such as a family member, a friend, a colleague, or a member of the same organization or team of the user of the communication device 2 of the request target of the position information, the positioning information provider 32 provides the position information of the communication device 2 or the communication station CS itself measured by the positioning function (that is, the positioning device 43) of the communication station CS to the related communication device 51.

The specific condition stored in the condition storage device 33 may be that the request for the position information of the communication device 2 received by the position information request acceptor 31 relates to emergency communication with the communication device 2. For example, when a request from a public emergency organization 52 such as a police organization, a fire organization, or the Coast Guard, or a non-public emergency organization 52 such as a security company registered in advance for the communication device 2, the positioning information provider 32 provides the emergency organization 52 with the position information of the communication device 2 or the communication station CS itself measured by the positioning function (that is, the positioning device 43) of the communication station CS. In addition, typically when the public emergency organization 52 notifies (distributes emergency information) the communication device 2 of an emergency occurring in the area where the communication device 2 is located (for example, an earthquake, a tsunami, a fire, an explosion, a crime, or a serious event), the positioning information provider 32 may provide the emergency organization 52 with the position information of the communication device 2 or the communication station CS itself measured by the positioning function (that is, the positioning device 43) of the communication station CS.

According to the present embodiment as described above, the use of the positioning function (that is, the positioning device 43) of the communication station CS can be limited to when the request for the position information concerning the communication device 2 connected to the communication station CS satisfies a specific condition.

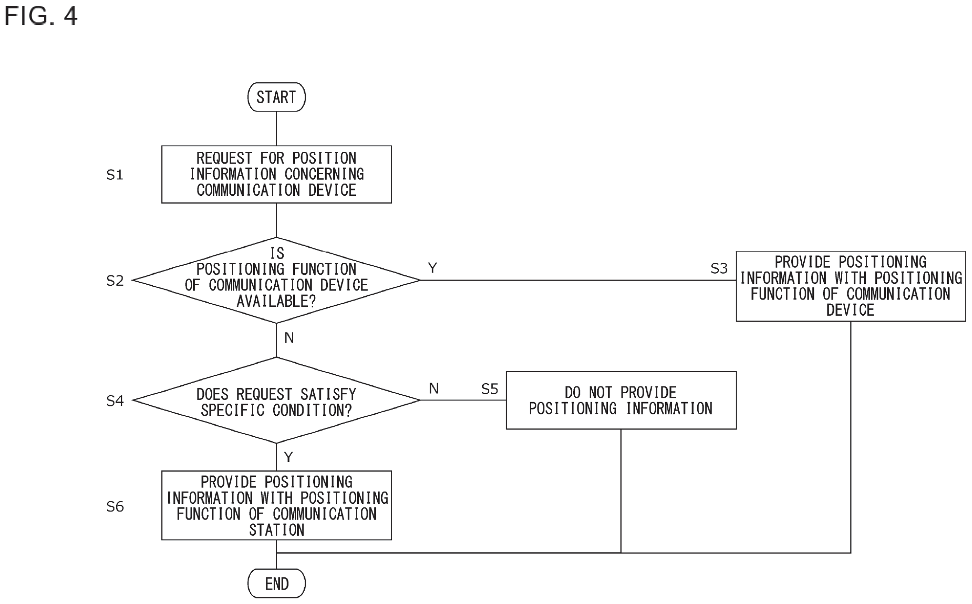

Fig. 4 is a flowchart illustrating processing with the communication control apparatus 3 according to the present embodiment. In the flowchart, "S" means a step or processing.

In S1, the position information request acceptor 31 accepts a request for position information concerning the communication device 2 connected to the communication station CS from the position information requesting entity 5. In S2, the positioning information provider 32 or the like determines whether the positioning function of the communication device 2 as a request target in S1 is available. For example, when the communication device 2 is outside the satellite positioning disabled region DR, and the satellite positioning device such as a GPS module can operate normally, "Yes" is determined in S2, and the process proceeds to S3. In S3, the positioning information provider 32 provides the position information of the communication device 2 measured by the positioning function of the communication device 2 itself to the position information requesting entity 5.

On the other hand, as illustrated in Fig. 3, when the communication device 2 is in the satellite positioning disabled region DR, and the satellite positioning device such as a GPS module cannot normally operate, "No" is determined in S2, and the process proceeds to S4. In S4, the positioning information provider 32 determines whether the request for the position information of the communication device 2 received in S1 satisfies the specific condition stored in the condition storage device 33. For example, when the requesting entity of the position information of the communication device 2 received in S1 is neither the related communication device 51 nor the emergency organization 52, "No" is determined in S4, and the process proceeds to S5. In S5, the positioning information provider 32 does not (cannot) provide the positioning information of the communication device 2 and the communication station CS to the position information requesting entity 5. At this time, the positioning information provider 32 may provide an error message such as "requested position information could not be acquired" to the position information requesting entity 5.

On the other hand, when the requesting entity of the position information of the communication device 2 received in S1 is the related communication device 51 or the emergency organization 52, "Yes" is determined in S4, and the process proceeds to S6. In S6, the positioning information provider 32 provides the positioning information acquired through the positioning function (that is, the positioning device 43) of the communication station CS to the position information requesting entity 5 as the position information concerning the communication device 2.

The present disclosure has been described above based on the embodiments. Various modifications can be made to combinations of constituent elements and processing in exemplary embodiments, and it is obvious to those skilled in the art that such modifications are included in the scope of the present disclosure.

The configuration, operation, and function of each apparatus and each method described in the embodiments can be realized by hardware resources or software resources, or by cooperation of hardware resources and software resources. As the hardware resources, for example, a processor, a ROM, a RAM, and various integrated circuits can be used. As the software resource, for example, a program such as an operating system or an application can be used.

The present disclosure may be expressed as the following items.
Item 1:
   A communication control apparatus including at least one processor that executes:
   accepting, by a position information request acceptor, a request for position information concerning a communication device connected to a communication station; and
   providing, by a positioning information provider, positioning information acquired through a positioning function of the communication station as the position information concerning the communication device when the request satisfies a specific condition.
Item 2:
   The communication control apparatus according to item 1, wherein when position information of the communication device itself can be acquired through a satellite positioning device included in the communication device, the positioning information provider does not provide positioning information acquired through the positioning function of the communication station.
Item 3:
   The communication control apparatus according to item 2, wherein when position information of the communication device itself acquired through the satellite positioning device satisfies a predetermined positioning quality criterion, the positioning information provider does not provide the positioning information acquired through the positioning function of the communication station.
Item 4:
   The communication control apparatus according to any one of items 1 to 3, wherein when the request satisfies a specific condition, the positioning information provider provides position information of the communication station itself acquired through the positioning function of the communication station as the position information concerning the communication device.
Item 5:
   The communication control apparatus according to item 4, wherein the position information of the communication station itself is acquired through a satellite positioning device included in the communication station.
Item 6:
   The communication control apparatus according to any one of items 1 to 5, wherein when the request satisfies a specific condition, the positioning information provider provides position information concerning the communication device estimated based on communication between the communication station and the communication device.
Item 7:
   The communication control apparatus according to any one of items 1 to 6, wherein when the request satisfies a specific condition, the positioning information provider provides positioning information acquired through an electromagnetic wave emitted from one of the communication station and the communication device to the other as the position information concerning the communication device.
Item 8:
   The communication control apparatus according to any one of items 1 to 7, wherein the specific condition is that the request relates to a related communication device having a predetermined relationship with the communication device.
Item 9:
   The communication control apparatus according to any one of items 1 to 8, wherein the specific condition is that the request relates to emergency communication with respect to the communication device.
Item 10:
   The communication control apparatus according to any one of items 1 to 9, wherein the communication station is a relay station that relays communication between a base station and the communication device.
Item 11:
   The communication control apparatus according to item 10, wherein the relay station is an integrated access and backhaul (IAB) node including a mobile termination (MT) that functions as a communication device with respect to the base station and a distributed unit (DU) that functions as a base station with respect to the communication device.
Item 12:
   The communication control apparatus according to item 10 or 11, wherein the base station is a non-terrestrial base station that flies.
Item 13:
   The communication control apparatus according to item 12, wherein the non-terrestrial base station is a communication satellite that flies in space.
Item 14:
   A communication control method including executing, by at least one processor:
   acceptance of a request for position information concerning a communication device connected to a communication station; and
   provision of positioning information acquired through a positioning function of the communication station as the position information concerning the communication device when the request satisfies a specific condition.
Item 15:
   A storage medium that stores a communication control program of causing at least one processor to execute:
   acceptance of a request for position information concerning a communication device connected to a communication station; and
   provision of positioning information acquired through a positioning function of the communication station as the position information concerning the communication device when the request satisfies a specific condition.

### INDUSTRIAL APPLICABILITY

The present disclosure relates to provision of position information concerning a communication device connected to a communication station.

### REFERENCE SIGNS LIST

1 wireless communication system, 2 communication device, 3 communication control apparatus, 5 position information requesting entity, 11 5G wireless communication system, 12 4G wireless communication system, 13 satellite communication system, 31 position information request acceptor, 32 position information provider, 33 condition storage device, 41 communication-device function device, 42 base-station function device, 43 positioning device, 51 related communication device, 52 emergency organization, 111 5G base station, 112 5G cell, 121 4G base station, 122 4G cell, 131 communication satellite, 132 satellite communication cell, 133 gateway, 431 satellite positioning device, 432 communication positioning device, 433 electromagnetic wave positioning device

## Claims

1. A communication control apparatus comprising at least one processor that executes:
accepting, by a position information request acceptor, a request for position information concerning a communication device connected to a communication station; and
providing, by a positioning information provider, positioning information acquired through a positioning function of the communication station as the position information concerning the communication device when the request satisfies a specific condition.

2. The communication control apparatus according to claim 1, wherein when position information of the communication device itself can be acquired through a satellite positioning device included in the communication device, the positioning information provider does not provide positioning information acquired through the positioning function of the communication station.

3. The communication control apparatus according to claim 2, wherein when position information of the communication device itself acquired through the satellite positioning device satisfies a predetermined positioning quality criterion, the positioning information provider does not provide the positioning information acquired through the positioning function of the communication station.

4. The communication control apparatus according to claim 1, wherein when the request satisfies a specific condition, the positioning information provider provides position information of the communication station itself acquired through the positioning function of the communication station as the position information concerning the communication device.

5. The communication control apparatus according to claim 4, wherein the position information of the communication station itself is acquired through a satellite positioning device included in the communication station.

6. The communication control apparatus according to claim 1, wherein when the request satisfies a specific condition, the positioning information provider provides position information concerning the communication device estimated based on communication between the communication station and the communication device.

7. The communication control apparatus according to claim 1, wherein when the request satisfies a specific condition, the positioning information provider provides positioning information acquired through an electromagnetic wave emitted from one of the communication station and the communication device to the other as the position information concerning the communication device.

8. The communication control apparatus according to claim 1, wherein the specific condition is that the request relates to a related communication device having a predetermined relationship with the communication device.

9. The communication control apparatus according to claim 1, wherein the specific condition is that the request relates to emergency communication with respect to the communication device.

10. The communication control apparatus according to claim 1, wherein the communication station is a relay station that relays communication between a base station and the communication device.

11. The communication control apparatus according to claim 10, wherein the relay station is an integrated access and backhaul (IAB) node including a mobile termination (MT) that functions as a communication device with respect to the base station and a distributed unit (DU) that functions as a base station with respect to the communication device.

12. The communication control apparatus according to claim 10, wherein the base station is a non-terrestrial base station that flies.

13. The communication control apparatus according to claim 12, wherein the non-terrestrial base station is a communication satellite that flies in space.

14. A communication control method comprising executing, by at least one processor:
acceptance of a request for position information concerning a communication device connected to a communication station; and
provision of positioning information acquired through a positioning function of the communication station as the position information concerning the communication device when the request satisfies a specific condition.

15. A storage medium that stores a communication control program of causing at least one processor to execute:
acceptance of a request for position information concerning a communication device connected to a communication station; and
provision of positioning information acquired through a positioning function of the communication station as the position information concerning the communication device when the request satisfies a specific condition.
